# EUROPÄISCHE PATENTSCHRIFT

(11) **EP 0 647 330 B1**
(45) Veröffentlichungstag und Bekanntmachung des Hinweises auf die Patenterteilung: **07.01.1998**
(21) Anmeldenummer: 93912697.5
(22) Anmeldetag: 28.04.1993
(51) Int. Cl.: G02C 5/14

(54) **BRILLENGESTELL**
SPECTACLE FRAME
MONTURE DE LUNETTES

(30) Priorität: 29.04.1992 DE 9205717 U
(43) Veröffentlichungstag der Anmeldung: 12.04.1995
(73) Patentinhaber: STANSCHEWSKI, Britta, D-79312 Emmendingen (DE)
(72) Erfinder: GUNTRAM, Gottlieb, D-22769 Hamburg (DE)
(86) Internationale Anmeldenummer: EP9301031
(87) Internationale Veröffentlichungsnummer: WO9322703

(56) Entgegenhaltungen:
- EP-A- 0 170 721
- DE-A- 2 427 210
- DE-B- 863 557
- DE-U- 9 110 984
- DE-U- 9 205 717
- FR-A- 909 490
- US-A- 4 169 665
- US-A- 4 790 645

## Beschreibung

Die Erfindung betrifft ein Brillengestell, bestehend aus einem Rahmenteil für die Brillengläser mit Scharnieren für jeweils einen Brillenbügel.

Die nach dem Stand der Technik bekannten Brillengestelle sind so ausgebildet, daß jeder der Brillenbügel im wesentlichen bis zum Bereich seiner Abknickung am Auflage- bzw. Anlageende geradlinig verläuft. Dies hat zur Folge, daß die Brillenbügel seitlich an den Schläfen des Kopfes anliegen, wo sie einen störenden, zum Teil sogar Kopfschmerzen verursachenden Druck ausüben.

Es ist Aufgabe der vorliegenden Erfindung, die eingangs genannten Brillengestelle dahingehend zu verbessern, daß die Bügel so ausgestaltet sind, daß sie zu keiner Druckbelastung an den Schläfen des Brillenträgers führen.

Diese Aufgabe wird durch das Brillengestell nach Anspruch 1 gelöst, dessen Neuerung darin besteht, daß das freie Bügelende von oben gesehen im wesentlichen U- bzw. V-förmig über ein Abstandshalterteil in ein Bogenteil zur Auflage auf den menschlichen Ohransatz übergehend ausgebildet ist. Vorteilhafterweise liegt im Tragezustand der Brillenbügel parallel zum Schläfenbereich des Brillenträgers, so daß die einzigen Berührungspunkte an der Kopfseite mit der Brille an dem Ohransatz liegen. Die Schläfen werden somit vollständig druckentlastet. Darüber hinaus erhält die Brille auch ein optisch gefälligeres Aussehen, da die Brillenbügel nicht zu unansehnlichen Eindrücken an der Kopfhaut führen können.

Weiterbildungen der Erfindung sind in den Unteransprüchen beschrieben.

So kann das Abstandshalterteil nach einer Ausgestaltung von oben gesehen rechtwinklig zu dem Bogenteil und dem an das Scharnier angrenzenden Bügelschaft (im folgenden auch "vorderer Bügelteil", "übriger Brillenbügel", "Brillenbügel" oder "Bügel" genannt) liegen. Nach einer weiteren Ausführung ist das Abstandsteil bogenförmig zu dem Bogenteil verlaufend, wobei nach einer weiteren Ausführung das Abstandshalterteil in das Ende eines jeden Brillenbügels integriert ist. In diesem Fall ist das Bogenteil in einem von oben gesehenen spitzen Winkel zu dem Brillenbügel verlaufend. Hierdurch wird gewährleistet, daß der Bügel nur in dem Bereich "an den Kopf", nämlich den Ohransatz, geführt wird, wo er auch eine Auflage- und Haltefunktion erfüllen soll. Aus optischen Gründen sind jedoch Abweichungen aus der rechtwinkligen Gestaltung möglich.

Weiterhin kann das Abstandshalterteil länger als die Dicke der Ohrmuschel sein. Diese Ausführungsform ist insbesondere dann bevorzugt, wenn das freie Bügelende so lang ausgebildet ist, daß seine längste Erstreckung bis hinter den hintersten Teil der Ohrmuschel reicht. Das freie Bügelende kann vorzugsweise im Bereich des Abstandshalterteils dann so gebogen werden, daß bei auf dem Ohrenansatz aufliegenden Bogenteil der Bügel bzw. das Abstandshalterteil berührungslos um das menschliche Ohr und entlang der Kopfseite verläuft. Die Ausgestaltung kann jedoch auch sein, daß eine Anlage mit Berührung erhalten wird. Der Bügel ist dann um das Ohr bis zum Ansatzpunkt des Bogenteils im hinteren Bereich des Ohrenansatzes herumgeführt, von wo es nach vorne weitergeführt ist. Hierbei sind das Abstandshalterteil und seine Übergangsbereiche zu dem Bogenteil und dem vorderen Bügelteil von oben gesehen im wesentlichen U-förmig ausgebildet.

Nach weiteren Ausgestaltungen der Erfindung kann der Übergangsbereich vom Abstandshalter zum Bogenteil in Bezug auf die Längsachse des übrigen Brillenbügels auch nach unten abgewinkelt sein, vorzugsweise in einem Winkel um 30°. Diese Abwinklung ermöglicht in der Höhe unterschiedliche Ansatzpunkte des Brillenbügels an dem Rahmenteil. Das Bogenteil kann auch nach vorn oder nach hinten geführt sein. Außerdem ist es auch möglich, das Bogenteil im Ohrenansatzauflagebereich bogenförmig auszusparen, wenn z.B. der Bügel die Form eines hochkant stehenden Flachprofils aufweist.

Zur besseren Druckverteilung ist das Bogenteil im Bereich seiner Auflagefläche schalenförmig ausgebildet.

Alternativ und insbesondere für sogenannte Sportbrillen kann das Bogenteil auch elastisch, insbesondere teilkreis- oder ringförmig ausgebildet sein.

Ein Ausführungsbeispiel der Erfindung ist in den Zeichnungen dargestellt. Es zeigen
Fig. 1 eine Ansicht des erfindungsgemäßen Brillengestells und
Fig. 2 bis 4 jeweils Ansichten eines Bügels in Bezug auf eine Ohrmuschel aus verschiedenen Perspektiven.

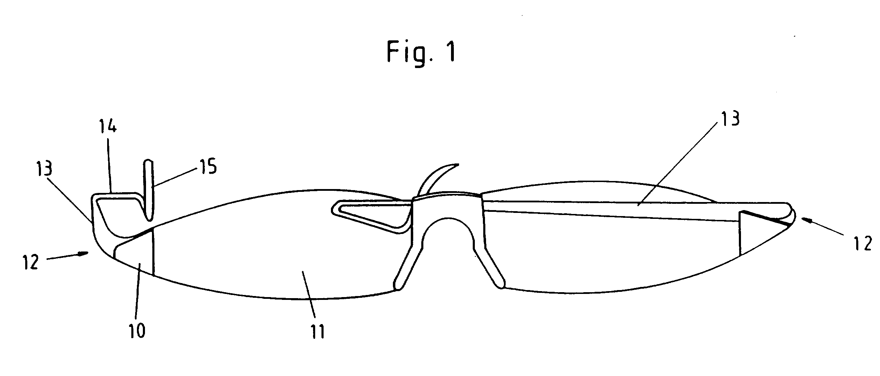

Das erfindungsgemäße Brillengestell besteht aus einem Rahmenteil 10 für Brillengläser 11 mit Scharnieren 12 zur gelenkigen Befestigung eines Brillenbügels 13. Aus Fig. 1 ist der Brillenbügel 13 jeweils in eingeklappter Stellung sowie ausgeklappter Stellung erkennbar. Die Erfindung erfaßt auch solche Ausführungsformen, bei denen es sich um sogenannte rahmenlose Brillen handelt, d.h. das Rahmenteil praktisch auf ein Anschlußstück des Scharniers an einem Brillenglas beschränkt wird.

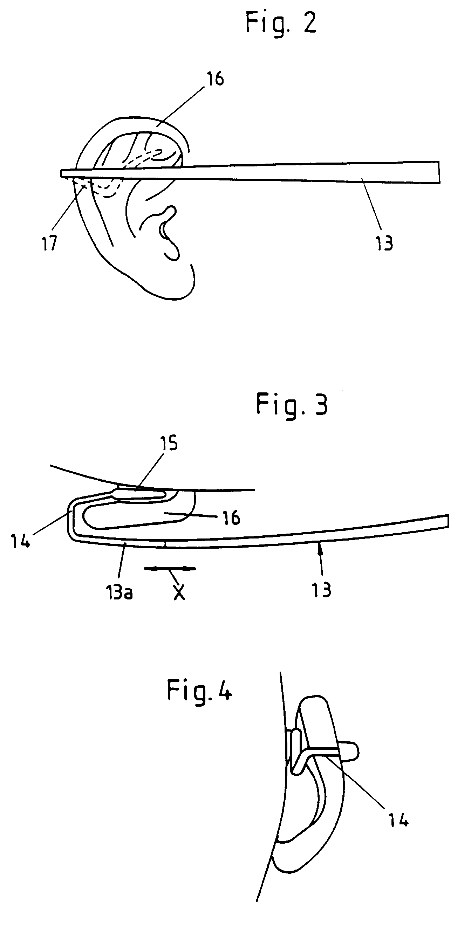

Der Brillenbügel geht in seinem hinteren Bereich über ein Abstandshalterteil 14 in ein Bogenteil 15 über, das zur Auflage auf den menschlichen Ohrenansatz ausgebildet ist. Wie insbesondere aus Fig. 3 und 4 ersichtlich, wird der Bügel 13 mit seinem besonders ausgestalteten Endbereich 13a somit um die Ohrmuschel 16 " herumgeführt ", wobei aufgrund des U-förmigen Profils des Abstandshalterteils 14 das Bogenteil 15 ein freier Schenkel des U-Teiles ist. Wie insbesondere aus Fig. 3 ersichtlich, ist die Länge des Abstandshalters 14 größer als die Dicke der Ohrmuschel 16, damit eine berührungslose Führung des Brillenbügels 13 einschließlich des Abstandshalters 14 um das Ohr gewährleistet ist, wobei jedoch auch andere Ausgestaltungen möglich sind. Das Abstandshalterteil 14 kann bogenförmig verlaufend ausgebildet sein. Auch kann eine Ausgestaltung gegeben sein, bei der das Bogenteil 15 in einem spitzen Winkel in den Bügel 13 übergeht. Der an das Abstandshalterteil 14 anschliessende freie Schenkel 17 (Fig.2) kann nach unten abgewinkelt sein, damit das Bogenteil 15 mit seiner Auflagefläche das Ohr "von hinten" teilweise umfaßt. Die Krümmung des Bogenteils 15 ist individuell dem Ohrenansatzbogen anzupassen.

Die vorliegende Erfindung umfaßt auch solche Varianten, bei denen der Brillenbügel 13 kürzer ausgebildet ist, also derart, daß sich der Abstandshalter 14 bereits vor dem vorderen Ohrenansatz anschließt. Die Form des Brillenbügels ist dann in einer oberen Draufsicht stufenförmig. Ebenfalls kann statt des Bogenteils 15 auch ein anderes elastisches, einen größeren Teilkreis umfassenderes Teil verwendet werden.

Besteht zum Beispiel jeder Bügel 13 aus einem hochkant stehenden Flachprofil, dann ist das auf dem Ohransatz liegende Bogenteil 15 in seinem Ohransatzauflagebereich mit einer bogenförmigen Ausnehmung versehen.

Jeder Brillenbügel 13 sollte in seiner Länge vorzugsweise verstellbar ausgebildet sein. Hierzu besteht z.B. der Brillenbügel aus zwei teleskopartig einschiebbaren oder auseinanderziehbaren Bügelabschnitten, die mittels einer Feststelleinrichtung oder Klemmeinrichtung in jeder Stellung arretierbar sind, so daß das Bügelende 13a mit seinem Abstandsteil 14 und dem Bogenteil 15 in Pfeilrichtung X längenverstellbar und den jeweiligen Erfordernissen anpaßbar ist (Fig.3). Das Abstandsteil 14 mit dem das Bogenteil 15 tragenden Ende 13a eines jeden Brillenbügels 13 sollte mit diesem lösbar verbunden sein, so daß ein Austauschen gegen andersartig ausgestaltete Endteile der Brillenbügel möglich ist.

## Patentansprüche

1. Brillengestell mit einem Rahmenteil für die Brillengläser, mit Scharnieren und mit einem jeweils daran befestigten Bügel, der aus einem Bügelschaft (13) und einem Bogenteil (15) zur Auflage auf den menschlichen Ohransatz besteht, welche mit einem Abstandshalterteil (14) miteinander verbunden sind, dadurch gekennzeichnet, daß das Abstandshalterteil (14) von oben gesehen im wesentlichen U-förmig oder V-förmig ausgebildet ist und den Bügelschaft (13) mit dem Bogenteil (15) so verbindet, daß das Bogenteil (15) von oben gesehen gegenüber dem Bügelschaft (13) nach innen versetzt ist und der Bügelschaft (13) den Kopf des Brillenträgers nicht berührt.

2. Brillengestell nach Anspruch 1, dadurch gekennzeichnet, daß das Abstandshalterteil (14) von oben gesehen in einem Winkel von dem Bogenteil (15) zu dem Bügelschaft (13) führt.

3. Brillengestell nach Anspruch 1, dadurch gekennzeichnet, daß das Abstandshalterteil (14) in der oberen Draufsicht bogenförmig ist.

4. Brillengestell nach Anspruch 1, dadurch gekennzeichnet, daß das Abstandshalterteil (14) in das Ende (13a) eines jeden Bügelschafts (13) integriert ist, wobei das Bogenteil (15) von oben gesehen in einem spitzen Winkel zu dem Bügelschaft (13) liegt.

5. Brillengestell nach einem der Ansprüche 1 bis 4, dadurch gekennzeichnet, daß das Abstandshalterteil (14) so gebogen ist, daß es bei auf dem Ohrenansatz aufliegendem Bogenteil (15) um das menschliche Ohr (16) herum und entlang der Kopfseite verläuft.

6. Brillengestell nach Anspruch 5, dadurch gekennzeichnet, daß das Abstandshalterteil (14) mit seinen Übergangsbereichen zu dem Bogenteil (15) und dem Bügelschaft (13) von oben gesehen im wesentlichen U-förmig ausgebildet ist.

7. Brillengestell nach einem der Ansprüche 1 bis 6, dadurch gekennzeichnet, daß ein Übergangsbereich (17) vom Abstandshalterteil (14) zum Bogenteil (15) in Bezug auf die Längsachse des Bügelschafts (13) nach unten abgewinkelt ist, vorzugsweise in einem Winkel um 30°.

8. Brillengestell nach einem der Ansprüche 1 bis 7, dadurch gekennzeichnet, daß das Bogenteil (15) im Bereich seiner Auflagefläche schalenförmig ausgebildet ist.

9. Brillengestell nach einem der Ansprüche 1 bis 8, dadurch gekennzeichnet, daß das Bogenteil (15) elastisch ausgeführt ist.

10. Brillengestell nach einem der Ansprüche 1 bis 9, dadurch gekennzeichnet, daß jeder Brillenbügel (13) in seiner Länge veränderbar ausgebildet ist.

11. Brillengestell nach einem der Ansprüche 1 bis 10, dadurch gekennzeichnet, daß das das Abstandshalterteil (14) mit dem das Bogenteil (15) tragende Ende (13a) eines jeden Bügelschafts (13) lösbar verbunden ist.

## Claims

1. A spectacle mounting having a frame part for the spectacle lenses, hinges, and a respective side bow fixed thereto and consisting of a bow shank (13) and a bow part (15) for resting it on the base of a human ear, which are connected to each other by means of a spacer part (14), characterized in that the spacer part (14) is formed substantially in U-shape or in V-shape as seen from above and connects the bow shank (13) and the bow part (15) in such a way that the bow part (15), as seen from above, is offset inwards with respect to the bow shank (13) and that the bow shank (13) does not contact the head of the person wearing the spectacles.

2. The spectacle mounting according to claim 1, characterized in that the spacer part (14), as seen from above, forms an angle between the bow part (15) and the bow shank (13).

3. The spectacle mounting according to claim 1, characterized in that the spacer part (14) takes the form of an arc as seen in plan view from above.

4. The spectacle mounting according to claim 1, characterized in that the spacer part (14) is integrated in the end (13a) of each of the bow shanks (15), the bow part (15) forming an acute angle with the bow shank (13) as seen from above.

5. The spectacle mounting according to any of claims 1 to 4, characterized in that the spacer part (14) is curved in such a way that it runs around the human ear (16) and along the side of the head when the bow part (15) rests on the base of the ear.

6. The spectacle mounting according to claim 5, characterized in that the spacer part (14) with its transition region to the bow part (15) and to the bow shank (13) is formed substantially in U-shape as seen from above.

7. The spectacle mounting according to any of claims 1 to 6, characterized in that one transition region (17) from the spacer part (14) to the bow part (15) forms a downward angle with respect to the longitudinal axis of the bow shank (13), preferably an angle of 30°.

8. The spectacle mounting according to any of claims 1 to 7, characterized in that the bow part (15) has a saucer-type shape in the region of its bearing area.

9. The spectacle mounting according to any of claims 1 to 8, characterized in that the bow part (15) is flexible.

10. The spectacle mounting according to any of claims 1 to 9, characterized in that each side bow (13) of the spectacles is formed so as to be variable in its length.

11. The spectacle mounting according to any of claims 1 to 10, characterized in that the spacer part (14) is detachably connected to that end (13a) of each bow shank (13) carrying the bow part (15).

## Revendications

1. Monture de lunettes composée d'un cadre pour les verres de lunettes, de deux charnières et de deux branches de lunettes montées chacune sur une charnière; les branches de lunettes se composent d'une tige (13) et d'une partie cintrée (15) qui repose sur la naissance de l'oreille; la tige (13) et la partie cintrée (15) sont reliées par une pièce entretoise (14) caractérisée par le fait que cette pièce entretoise (14) présente vue d'en haut essentiellement la forme d'un U ou d'un V, et qu'elle relie la tige (13) à la partie cintrée (15) de manière à ce que la partie cintrée (15) vue d'en haut soit décalée vers l'intérieur par rapport à la tige (13), et que la tige (13) ne touche pas la tête du porteur de lunettes.

2. Monture de lunettes selon la revendication 1, caractérisée par le fait que la pièce entretoise (14) relie vu d'en haut la partie cintrée (15) et la tige (13) en formant un angle.

3. Monture de lunettes selon la revendication 1, caractérisée par le fait que la pièce entretoise (14) présente vue d'en haut une forme cintrée.

4. Monture de lunettes selon la revendication 1, caractérisée par le fait que la pièce entretoise (14) est intégrée dans l'extrémité (13a) de chaque tige (13), la partie cintrée (15) formant vu d'en haut un angle aigu avec la tige (13).

5. Monture de lunettes selon l'une des revendications 1 à 4, caractérisée par le fait que la pièce entretoise (14) est coudée de manière à contourner l'oreille (16) et à longer le côté de la tête au niveau de la partie cintrée (15) qui repose sur la naissance de l'oreille.

6. Monture de lunettes selon la revendication 5, caractérisée par le fait que la pièce entretoise (14) présente avec ses zones de transition vers la partie cintrée (15) et vers la tige (13) vue d'en haut une forme essentiellement en U.

7. Monture de lunettes selon l'une des revendications 1 à 6, caractérisée par le fait qu'une zone de transition (17) entre la pièce entretoise (14) et la partie cintrée (15) forme par rapport à l'axe longitudinal de la tige un coude vers le bas, de préférence avec un angle de 30°.

8. Monture de lunettes selon l'une des revendications 1 à 7, caractérisée par le fait que la partie cintrée (15) présente la forme d'une coque dans la zone de sa surface d'appui.

9. Monture de lunettes selon l'une des revendications 1 à 8, caractérisée par le fait que la partie cintrée (15) est élastique.

10. Monture de lunettes selon l'une des revendications 1 à 9, caractérisée par le fait que la longueur de chaque branche de lunette (13) peut être modifiée.

11. Monture de lunettes selon l'une des revendications 1 à 10, caractérisée par le fait que la pièce entretoise (14) est reliée de facon amovible à l'extrémité (13a) de la tige (13) portant la partie cintrée (15).
